# EUROPÄISCHE PATENTSCHRIFT

(11) **EP 3 616 498 B1**
(45) Veröffentlichungstag und Bekanntmachung des Hinweises auf die Patenterteilung: **16.02.2022**
(21) Anmeldenummer: 19178630.0
(22) Anmeldetag: 06.06.2019
(51) Int. Cl.: A01F 12/30

(54) **SELBSTFAHRENDER MÄHDRESCHER MIT EINEM ENDLOS UMLAUFENDEN RÜCKLAUF-FÖRDERBAND UND RÜCKLAUFBAUGRUPPE DAFÜR**
SELF-PROPELLED COMBINE HARVESTER WITH AN ENDLESS RETURN CONVEYOR BELT AND RETURN ASSEMBLY FOR THE SAME
MOISSONNEUSE-BATTEUSE AUTOMOTRICE DOTÉE D'UNE BANDE TRANSPORTEUSE DE RETOUR SANS FIN ET MODULE DE RETOUR CORRESPONDANT

(30) Priorität: 27.08.2018 DE 102018120797
(43) Veröffentlichungstag der Anmeldung: 04.03.2020
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Bußmann, Jens, 49179 Ostercappeln (DE); Waten, Björn, 59320 Westkirchen (DE)
(74) Vertreter: CLAAS Gruppe

(56) Entgegenhaltungen:
- EP-A1- 0 302 210
- EP-A1- 2 965 614
- EP-A1- 3 078 543
- EP-B1- 0 302 210
- DE-A1-102004 018 882

## Beschreibung

Die vorliegende Erfindung betrifft einen selbstfahrenden Mähdrescher, insbesondere einen Axialrotor- Mähdrescher,
- mit einem Dreschwerk, das zum Dreschen von Erntegut vorgesehen ist, wobei in einer vertikalen Richtung unterhalb des Dreschwerks ein Vorbereitungsboden zum Transport von ausgedroschenen Körnern oder Früchten vorgesehen ist,
- mit einer Reinigungsanordnung, die zum Trennen von Nichtkornbestandteilen aus dem ausgedroschenen Erntegut vorgesehen ist, die dafür zumindest ein Trennsieb umfasst, und die dem Vorbereitungsboden nachgeordnet ist, und
- mit einer Restkornabscheidung, insbesondere einem Axialrotor, die zum Abscheiden von Restkörnern oder Restfrüchten aus dem ausgedroschenen Erntegut vorgesehen ist, und die dem Dreschwerk nachgeordnet ist, wobei unterhalb der Restkornabscheidung ein Rücklauf zum Transport der Restkörner oder Restfrüchte zur Reinigungsanordnung vorgesehen ist, und wobei der Rücklauf als Rücklaufbaugruppe ausgebildet ist, die ein aktiv angetriebenes, endlos umlaufendes Rücklauf- Förderband umfasst.

Das in einen Mähdrescher aufgenommene Erntegut wird zunächst in einem Dreschwerk gedroschen. Die im Dreschwerk abgeschiedenen Körner oder Früchte werden dann auf einem Vorbereitungsboden zu einer Reinigungsanordnung transportiert, in der sie mit Hilfe eines Luftstroms von Spreu und Halmteilen getrennt werden.

Um die beim Dreschen im ausgedroschenen Halmgut verbliebenen Restkörner oder Restfrüchte zu gewinnen, ist es bekannt, diese mittels einer Restkornabscheidung, die als Rotor oder Schüttler ausgebildet ist, zu separieren. Der Rotor oder der Schüttler weist dafür ein Trennsieb auf, durch das die Restkörner oder Restfrüchte an einen Rücklauf abgegeben werden. Der Rücklauf transportiert sie zu der Reinigungsanordnung, in der sie ebenfalls mittels des Luftstroms von Spreu und Halmteilen getrennt werden.

Als Rücklauf sind antriebsfreie Rücklauftaschen, Schneckenförderer oder schwingend angetriebene Rücklaufböden bekannt. Aufgrund des Bauteilaufwands, ihrer Bauhöhe und ihrem Gewicht sind Schneckenförderer nachteilig, zumal der Bauraum unterhalb der Restkornabscheidung regelmäßig sehr gering bemessen ist. Zudem können Schneckenförderer mehr Körnerbruch verursachen als Förderbänder. Bei Rückläufen, die als antriebsfreie Rücklauftaschen oder als schwingend angetriebene Rücklaufböden ausgebildet sind, kann es vor allem beim Befahren von hügeligem Gelände zu größeren und/oder ungleichmäßig verteilten Anhäufungen der Restkörner oder Restfürchte in dem Bauraum zwischen der Restkornabscheidung und dem Rücklauf oder sogar zu einem Gutstau kommen. Dadurch kann die Reinigungsanordnung zeitweise partiell überlastet sein, so dass die Reinigung der Körner oder Früchte von Spreu und Halmteilen unvollständig erfolgt, und diese mit der Spreu und den Halmteilen am Heck des Mähdreschers auf den Boden abgegeben werden. Diese Körner oder Früchte sind für die Ernte verloren. Weiterhin kann es zu Verstopfungen des Übergabebereiches kommen, in dem die Restkörner oder Restfürchte an die Reinigungsanordnung übergeben werden.

Alternativ zu solchen bekannten Rückläufen zeigt die Druckschrift EP 0 302 210 B1 einen Mähdrescher, der sowohl als Vorbereitungsboden als auch als Rücklauf jeweils ein endlos umlaufendes Förderband zum Transport nutzt. Die Restkornabscheidung ist bei diesem Mähdrescher als Axialrotor ausgebildet, der sich in einer axialen Richtung gegen eine Fahrtrichtung des Mähdreschers erstreckt. Die beiden Förderbänder werden gegenläufig angetrieben und transportieren die Körner oder Früchte beziehungsweise Restkörner oder Restfrüchte zu einem Spalt zwischen den Förderbändern hin. Der auf dem Vorbereitungsboden- Förderband transportierte Erntegutstrom aus Körnern und Früchten sowie der auf dem Rücklauf- Förderband transportierte Erntegutstrom fallen dann unabhängig voneinander etwa parallel zueinander durch den Spalt in die Reinigung. Dadurch können zeitweise partiell ungleich große und/oder ungleich verteilte Mengen an Körnern oder Früchten in die Reinigung gelangen und die Effektivität des Mähdreschers dadurch sinken.

Die EP 2 965 614 A1 offenbart einen Mähdrescher mit einer als Axialrotor ausgebildeten Restkornabscheidung. Unterhalb des Axialrotors ist ein schwingend angetriebener Rücklauf angeordnet, wobei der Rücklauf die Körner auf den Vorbereitungsboden abwirft. Mittels des Vorbereitungsbodens werden die Körner hin zu der Reinigung transportiert.

Aufgabe der vorliegenden Erfindung ist es, einen Mähdrescher dahingehend zu verbessern, dass im Übergabebereich zwischen Rücklauf, Vorbereitungsboden und Reinigung weniger Körner oder Früchte verloren gehen, und der Mähdrescher daher effektiver arbeitet.

Die Aufgabe wird gelöst mit einem selbstfahrenden Mähdrescher mit den Merkmalen des unabhängigen Patentanspruchs 1 sowie eine Rücklaufbaugruppe mit den Merkmalen des unabhängigen Patentanspruchs 9. Vorteilhafte Ausführungsformen sind den abhängigen Ansprüchen entnehmbar.

Dafür wird ein selbstfahrender Mähdrescher geschaffen. Der Mähdrescher weist ein Dreschwerk auf, das zum Dreschen von Erntegut vorgesehen ist. In einer vertikalen Richtung unterhalb des Dreschwerks ist ein Vorbereitungsboden zum Transport von ausgedroschenen Körnern oder Früchten vorgesehen.

Der Mähdrescher weist eine Reinigungsanordnung auf, die zum Trennen von Nichtkornbestandteilen aus dem ausgedroschenen Erntegut vorgesehen ist. Dafür weist die Reinigungsanordnung zumindest ein Trennsieb auf. Sie ist dem Vorbereitungsboden nachgeordnet. Dabei wird zum Abtrennen der Nichtkornbestandteile bevorzugt ein Luftstrom genutzt.

Weiterhin weist der Mähdrescher eine Restkornabscheidung auf, die zum Abscheiden von Restkörnern oder Restfrüchten aus dem ausgedroschenen Erntegut vorgesehen ist. Die Restkornabscheidung ist dem Dreschwerk nachgeordnet. Unterhalb der Restkornabscheidung ist ein Rücklauf zum Transport der Restkörner oder Restfrüchte zur Reinigungsanordnung vorgesehen. Zudem ist der Rücklauf als aktiv angetriebenes, endlos umlaufendes Rücklauf- Förderband ausgebildet.

Durch die Ausbildung des Rücklaufs als aktiv angetriebenes Rücklauf- Förderband können sich auch in hügeligem Gelände unterhalb der Restkornabscheidung, insbesondere bei Aufwärtsfahrt, weniger Restkörner oder Restfrüchte anhäufen, da die Restkörner oder Restfrüchte kontinuierlich abtransportiert werden. Die Schichthöhe auf dem Rücklauf-Förderband bleibt daher verhältnismäßig klein und ist gegenüber einem schwingend angetriebenen Rücklaufboden erheblich verringert. Dadurch kann ein Abstand zwischen dem Axialrotor und dem Förderband verringert werden, so dass der für die Reinigungsvorrichtung zur Verfügung stehende Bauraum vergrößert ist. Zudem fördert das Rücklauf- Förderband das Erntegut auch bei Auf- oder Abfahrt in starker Schräglage aktiv zum Vorbereitungsboden.

Der Mähdrescher zeichnet sich dadurch aus, dass das Rücklauf- Förderband zum Abwurf der Restkörner oder Restfrüchte auf den Vorbereitungsboden vorgesehen ist.

Beim Abwurf der Restkörner oder Restfrüchte werden diese aufgefächert. Dadurch verteilen sie sich breitflächig auf dem Vorbereitungsboden und vermischen sich mit den unmittelbar im Dreschwerk abgeschiedenen Körnern oder Früchten. Der nachgeordneten Reinigungsanordnung wird dadurch ein insgesamt sehr gleichmäßig großer Erntegutstrom aus Körnern und Früchten übergeben.

Prinzipiell kann als Vorbereitungsboden ein aktiv angetriebener Vorbereitungsboden, beispielsweise ein endlos umlaufendes Vorbereitungsboden- Förderband oder ein mit angetriebenen Schneckenförderern ausgestatteter Vorbereitungsboden genutzt werden. Es ist aber bevorzugt, dass der Vorbereitungsboden als schwingend angetriebener Vorbereitungsboden ausgebildet ist. Durch die schwingende Bewegung des Vorbereitungsbodens werden die Körner oder Früchte gleichmäßig über den Vorbereitungsboden verteilt. Der an die nachgeordnete Reinigungsanordnung übergebene Erntegutstrom weist auch in unebenem Gelände dadurch keine Anhäufungen mehr auf und ist daher homogenisiert. Dadurch ist die Reinigung sehr effektiv möglich.

Für die bessere Verteilung der Restkörner oder Restfrüchte ist es weiterhin von Vorteil und somit bevorzugt, dass diese durch das Rücklauf- Förderband zumindest geringfügig beschleunigt werden. Dadurch ist beim Abwurf eine größere Wurfweite überbrückbar, wobei sich die Körner oder Früchte besser auffächern können.

In einer bevorzugten Ausführungsform ist die Geschwindigkeit des Rücklauf- Förderbandes dafür veränderbar vorgesehen. Besonders bevorzugt ist sie vom Bediener manuell und/oder mittels einer Steuerungseinheit automatisch, insbesondere in Abhängigkeit von einer Verteilung und/oder Anhäufung der Restkörner und/oder Restfrüchte auf dem Rücklauf-Förderband, einstellbar. Dafür weist der Mähdrescher bevorzugt Sensoren zur Erfassung der Verteilung und/oder Anhäufung der Restkörner oder Restfrüchte auf dem Rücklauf-Förderband auf, insbesondere eine oder mehrere Kameras, wobei die Steuerungseinheit dafür vorgesehen ist, die Sensordaten auszuwerten und die Auswertung dem Bediener an einer Benutzerschnittstelle anzuzeigen und/oder die Geschwindigkeit des Rücklauf-Förderbandes in Abhängigkeit von der Auswertung zu steuern.

Dabei ist es bevorzugt, dass eine Transportgeschwindigkeit der Körner oder Früchte mit dem Rücklauf- Förderband größer als eine Transportgeschwindigkeit auf einem herkömmlichen schwingend angetriebenen Rücklaufboden ist. Durch den schnellen aktiven Abtransport der Körner oder Früchte ist die Schichtdicke entsprechend geringer.

Durch das Einstellen der Geschwindigkeit des Rücklauf- Förderbandes kann zudem die Wurfweite der Restkörner oder Früchte auf den Vorbereitungsboden eingestellt werden. Das längere Verbleiben auf dem Vorbereitungsboden bewirkt zudem eine bessere Schichtung, so dass sich die Körner und Früchte unterhalb von Spreu und Halmteilen anordnen, bevor sie an einer Fallstufe in die Reinigungsvorrichtung fallen. Es hat sich gezeigt, dass dadurch die Reinigungswirkung verbessert ist.

Dabei ist es bevorzugt, dass das Rücklauf- Förderband ausreichend schnell angetrieben ist, so dass die Körner und Früchte auch bei Hanglage, insbesondere am Seitenhang, schnell genug abtransportiert werden und dabei nicht wegrutschen. Dadurch treten keine Anhäufungen oder am Seitenhang Veränderungen in der Querverteilung oder ungleichmäßige Beschickung der Reinigung auf, die zu erhöhten Verlusten führen können.

In einer bevorzugten Ausführungsform ist der Mähdrescher als ein Axialrotor- Mähdrescher ausgebildet. Die Restkornabscheidung ist dabei durch eine Axialrotor gebildet. In dieser Ausführungsform ist es bevorzugt, dass sich die Rücklaufbaugruppe, und insbesondere mit ihr das Rücklauf- Förderband, in eine Längsrichtung im Wesentlichen parallel zum Axialrotor, und insbesondere unterhalb diesem, erstreckt. Dabei ist es weiterhin bevorzugt, dass der Axialrotor sowie die Rücklaufbaugruppe zum Dreschwerk hin ein Gefälle aufweisen. Prinzipiell sind aber auch anders ausgeführte Vorrichtungen zur Restkornabscheidung bevorzugt, beispielsweise ein in Querrichtung quer zur Längsrichtung angeordneter Rotor oder ein Schüttler.

Am Rücklauf- Förderband sind bevorzugt Transportstege angeordnet. In einer bevorzugten Ausführungsform erstrecken sich die Transportstege in die Querrichtung quer zur Längsrichtung. Vorzugsweise erstrecken sie sich über eine gesamte Breite des Rücklauf-Förderbandes. Es sind aber auch andere Ausführungsformen der Transportstege bevorzugt, beispielsweise v- förmig oder bogenförmig ausgebildete Transportstege und/oder zueinander versetzte Transportstege. Die Restkörner oder Restfrüchte können mit den Transportstegen leichter und/oder gleichmäßiger verteilt transportiert werden, insbesondere im Vergleich zu einem glatten Rücklauf- Förderband und insbesondere in hügeligem Gelände. Zudem kann ein Übergaberaum zwischen Rücklauf- Förderband und Vorbereitungsboden bei einer drohenden Verstopfung mit den Transportstegen aktiv freigeräumt werden.

In einer ebenfalls bevorzugten Ausführungsform weist eine für den Transport genutzte Außenfläche eine Kontur auf, insbesondere eine Rasterkontur, eine Wellenkontur oder eine raue Kontur. Eine solche Kontur verbessert die Griffigkeit für die Restkörner oder Restfrüchte, so dass diese dadurch ebenfalls leichter und/oder gleichmäßiger verteilt transportierbar sind. Es sind aber auch Rücklauf- Förderbänder mit einer glatten Außenfläche und ohne Transportstege bevorzugt.

Eine Überlappung des Rücklauf- Förderbandes mit dem Vorbereitungsboden ist bevorzugt einstellbar vorgesehen. Dafür ist es bevorzugt, dass die Rücklaufbaugruppe in und gegen die Längsrichtung verschieblich ist. Dies ermöglicht neben der Einstellung der Geschwindigkeit des Rücklauf- Förderbandes die Einstellung des Auftreffbereiches der Restkörner oder Restfrüchte auf den Vorbereitungsboden. Die Überlappung wird bevorzugt in Abhängigkeit vom Erntegut eingestellt. Bevorzugt ist sie manuell einstellbar. Es ist aber ebenfalls eine maschinelle Einstellung oder eine automatische Einstellung in Abhängigkeit vom Erntegut bevorzugt.

Dafür weist der Mähdrescher bevorzugt ein ortsfestes Rahmenteil auf, an dem die Rücklaufbaugruppe verschieblich gelagert ist. Zum Verschieben ist bevorzugt ein Stellrad vorgesehen. Besonders bevorzugt sind in Querrichtung an gegenüberliegenden Seiten des Mähdreschers zwei ortsfeste Rahmenteile sowie zwei Stellräder vorgesehen, die durch eine gemeinsame Welle miteinander verbunden sind. Vorzugsweise wirken die Stellräder mit den Seitenwänden der Rücklaufbaugruppe zusammen. Dadurch kann diese gleichmäßig in und gegen die Längsrichtung verschoben werden. Zu Wartungszwecken ist es weiterhin bevorzugt, dass die Rücklaufbaugruppe dem Mähdrescher entnehmbar ist.

Zudem weist der Mähdrescher bevorzugt einen Antrieb auf, mit dem das Rücklauf-Förderband antreibbar ist, wobei der Antrieb weiterhin bevorzugt vom Rücklauf- Förderband abkoppelbar ist. Zwischen Antrieb und Rücklauf- Förderband ist dafür bevorzugt eine Kupplung angeordnet.

Vorzugsweise ist der Antrieb an einem dem Dreschwerk zugewandten Ende der Rücklaufbaugruppe, im Folgenden antriebsseitiges Ende, angeordnet. Prinzipiell ist der Antrieb aber auch am gegenüberliegenden Ende der Rücklaufbaugruppe, im Folgenden abtriebsseitiges Ende, möglich, so dass das Förderband geschoben wird.

Die Aufgabe wird weiterhin gelöst mit einer Rücklaufbaugruppe für einen solchen Mähdrescher. Die Rücklaufbaugruppe weist bevorzugt einen Rahmen auf, der zwei im Wesentlichen parallel zueinander angeordnete Seitenwände umfasst. Die Seitenwände erstrecken sich in eine Längsrichtung. Das endlos umlaufende Rücklauf- Förderband ist bevorzugt zwischen den Seitenwänden angeordnet. In dieser Ausführungsform ist die Rücklaufbaugruppe modular ausgebildet und kann separat gefertigt und in den Mähdrescher eingebaut werden. Aufgrund ihrer Modularität ist die Rücklaufbaugruppe dem Mähdrescher, insbesondere für Wartungszwecke, leicht entnehmbar sowie austauschbar.

Vorzugsweise erstrecken sich zwischen den Seitenwänden an einem antriebsseitigen Ende eine Antriebswelle zum Antrieb des Rücklauf- Förderbandes und an einem abtriebsseitigen Ende eine Abtriebswelle jeweils in eine Querrichtung quer zur Längsrichtung. Das Rücklauf-Förderband umschlingt die Antriebswelle sowie die Abtriebswelle bevorzugt jeweils zumindest teilweise.

Um Längenänderungen des Rücklauf- Förderbandes ausgleichen zu können, ist es weiterhin bevorzugt, dass dieses mittels einer Spannvorrichtung vorgespannt ist. Die Spannvorrichtung ist bevorzugt am Rahmen, insbesondere an einer der Seitenwände, angeordnet. Bevorzugt wird das Rücklauf- Förderband mit der Rückstellkraft einer Feder vorgespannt. Um die Zugänglichkeit zur Spannvorrichtung zu gewährleisten, ist es bevorzugt, dass sie am abtriebsseitigen Ende der Rücklaufbaugruppe vorgesehen ist.

In einer bevorzugten Ausführungsform sind an den Seitenwänden jeweils eine Transportleiste, insbesondere eine Lochleiste, zum insbesondere manuellen, Verschieben der Rücklaufbaugruppe in und gegen die Längsrichtung vorgesehen. Dadurch können die Zähne zweier mittels einer Welle miteinander verbundener, an einem ortsfesten Rahmenteil des Mähdreschers angeordneter, ortsfester Stellräder in die Lochleiste eingreifen. Das Drehen der Stellräder ermöglicht dann das Verschieben der Rücklaufbaugruppe an beiden Seitenwänden gleich schnell und ohne Richtungsdifferenz.

Um einen vom Rücklauf- Förderband umschlossenen Zwischenraum gegen Staub und Schmutz abzudichten, ist es weiterhin bevorzugt, dass oberhalb und/oder unterhalb des Rücklauf- Förderbandes Dichtmittel vorgesehen sind. Die Dichtmittel sind bevorzugt an den dem Rücklauf- Förderband zugewandten Innenflächen der Seitenwände angeordnet. Vorzugsweise umfassen die Dichtmittel an der Oberseite des Rücklauf- Förderbandes jeweils eine insbesondere aus einem Kunststoff gebildete Dichtlippe. Weiterhin bevorzugt sind an der Unterseite jeweils dichtende Auflagen, insbesondere aus einer Blechleiste, angeordnet. Es ist besonders bevorzugt, dass sich die Dichtmittel nicht über eine gesamte Länge des Rücklauf- Förderbandes erstrecken, so dass Staub und Schmutz an den Enden der Dichtmittel aus dem Zwischenraum austreten kann.

Um dennoch im Zwischenraum befindlichen Staub und Schmutz zu entfernen, ist es weiterhin bevorzugt, dass in den Seitenwänden Reinigungsöffnungen vorgesehen sind, durch die der Zwischenraum von außen zugänglich ist. Durch die Reinigungsöffnungen kann der Staub und Schmutz abgesaugt werden. Im Betrieb des Mähdreschers sind die Reinigungsöffnungen bevorzugt jeweils mittels eines Deckels verschließbar.

Die Geschwindigkeit des Förderbandes ist bevorzugt mittels eines Drehzahlsensors bestimmbar. Besonders bevorzugt ist der Drehzahlsensor an der Abtriebswelle angeordnet.

In einer bevorzugten Ausführungsform ist das Rücklauf- Förderband aus einem mit einem Kunststoff, insbesondere einem Elastomer wie beispielsweise Gummi oder ein Gummigemisch, beschichteten Textil hergestellt. Das Textil ist dabei bevorzugt ein Gewebe, Gewirk oder Geflecht. Es kann aber auch als Gestrick oder Vlies ausgebildet sein.

Die vorliegende Erfindung wird im Folgenden anhand von **Figuren** beschrieben. Die **Figuren** sind lediglich beispielhaft und schränken den allgemeinen Erfindungsgedanken nicht ein. Es zeigen:
- **Fig. 1**: schematisch eine Seitenansicht eines selbstfahrenden Mähdreschers, hier eines Axialrotor- Mähdreschers, nach dem Stand der Technik;
- **Fig. 2**: in (a) und (b) jeweils schematisch einen Ausschnitt aus einem erfindungsgemäßen Axialrotor- Mähdrescher;
- **Fig. 3**: eine Rücklaufbaugruppe für den Mähdrescher der **Fig. 2** in einer perspektivischen Ansicht;
- **Fig. 4**: einen Ausschnitt aus der Rücklaufbaugruppe und einem Axialrotor für den Mähdrescher der **Fig. 2** in einer perspektivischen Ansicht; und
- **Fig. 5**: in **(a)** schematisch einen Ausschnitt aus der Rücklaufbaugruppe und dem Axialrotor für den Mähdrescher der **Fig. 2** in einer Seitenansicht und in **(b)** schematisch einen Schnitt durch die Rücklaufbaugruppe der **Fig. 5 (a)**.

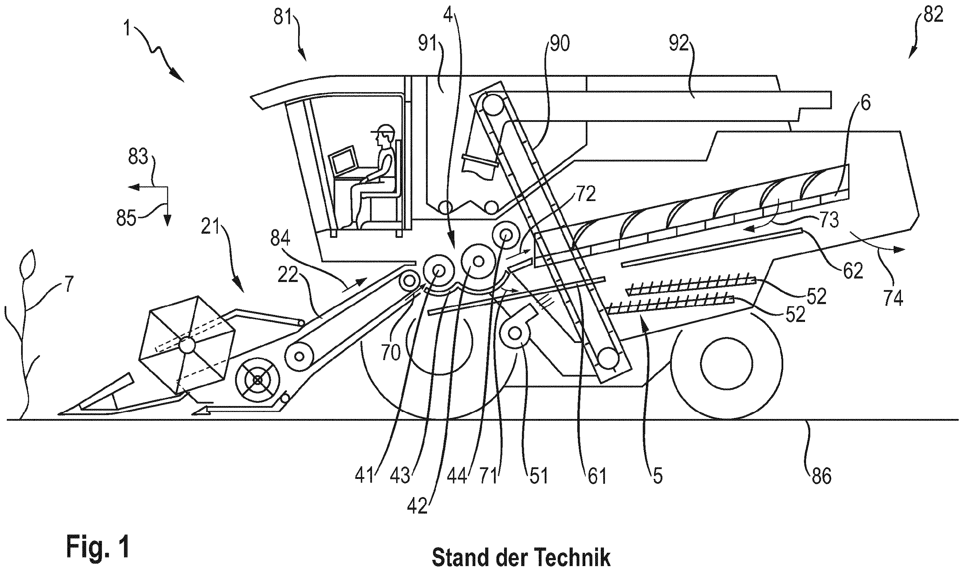

**Fig. 1** zeigt schematisch eine Seitenansicht eines selbstfahrenden Mähdreschers 1, hier eines Axialrotor- Mähdreschers, nach dem Stand der Technik.

Während einer Erntefahrt mittels eines Mähdreschers 1 von einem Vorsatzgerät 21, welches an einer Front 81 des Mähdreschers 1 angeordnet ist, abgeschnittenes Erntegut 7 wird von einer Vielzahl Aggregaten des Mähdreschers 1, die zur Förderung und/oder zur Verarbeitung des Erntegutes 7 vorgesehen sind, verarbeitet. Dafür wird das Erntegut 7 vom Vorsatzgerät 21 aus während der Erntefahrt einem Schrägförderer 22 zugeführt, der es in eine Förderrichtung 84, insbesondere entgegen einer Fahrtrichtung 83 des Mähdreschers 1, in diesen hinein fördert. **Fig.1** zeigt schematisch eine Seitenansicht eines solchen selbstfahrenden Mähdreschers 1 nach dem Stand der Technik.

Das Erntegut 7 gelangt dann zunächst in ein Dreschwerk 4. Das Dreschwerk 4 weist mehrere Trommeln 41, 42, 44 auf, um einen hohen Erntegutdurchsatz bei geringen Körnerverlusten zu ermöglichen. Sie weist hier eine Vorbeschleunigungstrommel 41 sowie eine dieser in Förderrichtung 84 nachgeordnete Dreschtrommel 42 auf. Aufgrund der Vorbeschleunigung des Ernteguts 7 mittels der Vorbeschleunigungstrommel 41 ist ein hoher Erntegutdurchsatz bei geringem Körnerverlust möglich. Zudem weist das Dreschwerk 4 eine Strohwendetrommel 44 auf, mit der das Erntegut 7 einer Einrichtung zur Restkornabscheidung 6 zugeführt wird.

Die bereits an das Dreschwerk 4 ausgedroschenen Körner oder Früchte werden als Korn-Spreu-Gemisch an einem Abscheidekorb 43 des Dreschwerks 4 abgeschieden. Anschließend werden sie über einen Vorbereitungsboden 61, der hier als schwingend angetriebener Vorbereitungsboden ausgebildet ist, und der unterhalb des Abscheidekorbes 43 angeordnet ist, einer Reinigungsanordnung 5 zugeführt. Die Reinigungsanordnung 5 trennt die Körner oder Früchte von Nichtkornbestandteilen. Sie umfasst ein Gebläse 51 und hier mehrere Trennsiebe 52.

Mit dem Gebläse 51 wird ein Luftstrom 50 erzeugt, der die Spreu und Halmteile zum rückwärtigen Heck 82 des Mähdreschers 1 bläst. Am Heck 82 verlassen die Spreu- und Halmteile den Mähdrescher 1.

Die Körner werden einem Körnerelevator 90 zugeführt, mit dem sie in einen Korntank 91 transportiert werden. Sie können mittels eines Auslaufrohres 92 in einen Transportwaren (nicht gezeigt) abgetankt werden.

Mit dem Dreschwerk 4 ausgedroschenes, überwiegend aus Stroh bestehendes Halmgut wird über die Strohwendetrommel 44 der Restkornabscheidung 6 zugeführt. Diese ist hier als Axialrotor gebildet. Sie kann aber auch als Hordenschüttler (nicht gezeigt) ausgebildet sein. Im Folgenden werden die Begriffe Restkornabscheidung 6 und Axialrotor synonym verwendet. Die Erfindung betrifft aber auch Mähdrescher 1 mit einem Hordenschüttler.

Der Axialrotor 6 fördert das im Wesentlichen als Halmgut ausgebildete Erntegut 7 zum Heck 82 des Mähdreschers 1. Dabei werden noch im Halmgut verbliebene Körner und Früchte vom Stroh abgeschieden. Diese fallen auf einen Rücklaufboden 62, der sie zum Vorbereitungsboden 61 fördert. Von dort aus werden sie zu den Sieben 52 der Reinigungsanordnung 5 gefördert. Die Siebe 52 sind in einem gemeinsamen Siebkasten (nicht bezeichnet) angeordnet. Mit ihnen werden noch verbliebene Spreu und Halmteile von den Körnern oder Früchten getrennt.

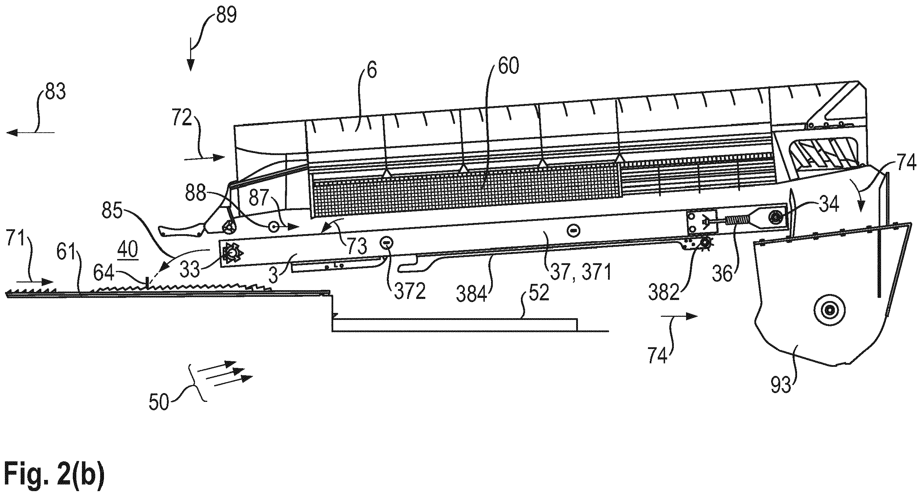

Am Heck 82 verlässt das Stroh den Mähdrescher 1. Dort kann es mittels eines Strohhäckslers 93 (s. **Fig. 2 (b)**) zerkleinert werden oder es wird ungehäckselt als Schwad auf dem Boden 85 abgelegt.

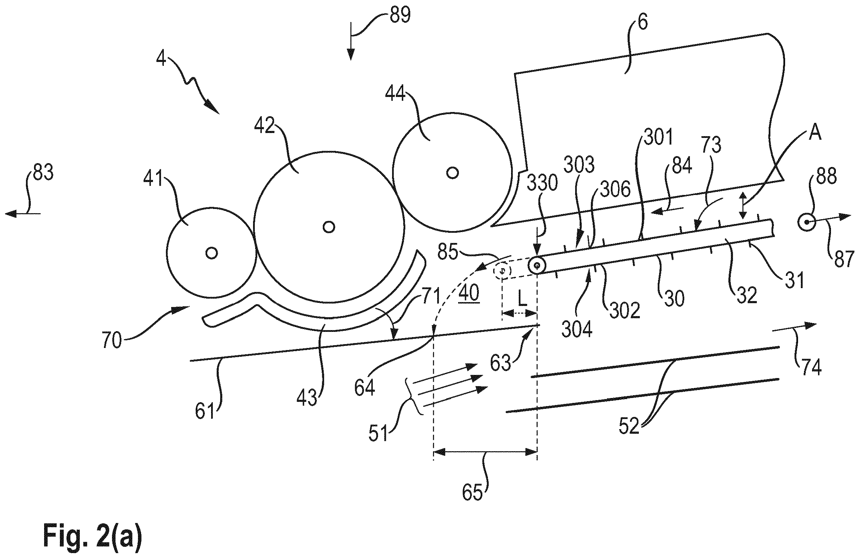

**Fig. 2** zeigt in **(a)** und **(b)** jeweils einen ersten Ausschnitt aus einem erfindungsgemäßen Mähdrescher 1. Sichtbar sind in **(a)** das Dreschwerk 4 mit dem in vertikaler Richtung 89 unterhalb des Dreschwerks 4 angeordneten Vorbereitungsboden 61, ein Ausschnitt aus dem für die Restkornabscheidung genutzten Axialrotor 6, schematisch ein unterhalb des Axialrotors 6 angeordneten Rücklauf- Förderboden 30, von dem ebenfalls nur ein Ausschnitt gezeigt ist, sowie schematisch ein Ausschnitt aus der Reinigungsanordnung 5, die unterhalb des Vorbereitungsbodens 61 sowie unterhalb des Rücklauf- Förderbodens 30 angeordnet ist.

Das Dreschwerk 4 umfasst die Vorbeschleunigungstrommel 41, die Dreschtrommel 42, den Abscheidekorb 43 sowie die Strohwendetrommel 44. Die im Dreschwerk 4 abgeschiedenen Körner oder Früchte 71 fallen durch den Abscheidekorb 43 auf den Vorbereitungsboden 61. Der Vorbereitungsboden 61 ist auch hier als schwingend angetriebener Vorbereitungsboden ausgebildet. Durch seine schwingende Bewegung werden die Körner oder Früchte 71 zu einem Ende des Vorbereitungsbodens 61 transportiert, das als Fallstufe 63 dient. An der Fallstufe 63 fallen die Körner oder Früchte 71 in die Reinigungsanordnung 5.

Die im Axialrotor 6 abgeschiedenen Restkörner oder Restfrüchte 73 fallen zunächst auf das Rücklauf- Förderband 30 und werden mit ihm aktiv zu einem Übergaberaum 40 transportiert, der unterhalb des Dreschwerks 4 und oberhalb des Vorbereitungsbodens 61 sowie in Fahrtrichtung 83 vor dem Rücklauf- Förderband 30 angeordnet ist.

An einem dem Dreschwerk 4 zugewandten Ende des Rücklauf- Förderbandes 30 werden die Restkörner oder Restfrüchte 73 abgeworfen. Dadurch fächern sie sich auf und fallen auf den Vorbereitungsboden 61, auf dem sie sich mit den im Dreschwerk 4 abgeschiedenen Körner oder Früchten 71 vermischen. Durch die schwingende Bewegung des Vorbereitungsbodens 61 verteilen sie sich gleichmäßig über den Vorbereitungsboden 61 und werden mit den Körnern oder Früchten 71 zur Fallstufe 63 transportiert.

Die Reinigungsanordnung 5 umfasst ebenfalls das Gebläse 50, das hier nur schematisch durch Pfeile dargestellt ist, sowie hier zwei Trennsiebe 52. Bereits beim Fallen von der ?Fallstufe 63 in die Reinigungsanordnung 5 geraten die Körner oder Früchte 71 in den Luftstrom (nicht bezeichnet) des Gebläses 50. Da die Körner oder Früchte 71 schwerer als die im Erntegutstrom verbliebenen Spreu und Halmteile 74 sind, fallen sie auf und durch die Trennsiebe 52 hindurch, während die Spreu und Halmteile 74 zum Heck 82 des Mähdreschers 1 und von dort hinaus auf den Boden 86 gefördert werden.

Gegenüber dem in **Fig. 1** beschriebenen Mähdrescher 1 ist der Rücklaufboden 62 hier daher durch das Rücklauf- Förderband 30 ersetzt.

Das Rücklauf- Förderband 30 erstreckt sich etwa parallel zu dem und in vertikaler Richtung 89 unterhalb des Axialrotors 6. Dadurch ist ein Abstand A des Rücklauf- Förderbandes 30 zum Axialrotor 6 etwa konstant. Die Menge der mit dem Rücklauf- Förderband 30 zum Vorbereitungsboden 61 transportierten Restkörner oder Restfrüchte 73 kann in Abhängigkeit vom Erntegut 7 und den Erntebedingungen groß sein. Da jedoch die Restkörner oder Restfrüchte 73 aktiv von dem Rücklauf- Förderband 30 zum Übergabebereich 40 gefördert werden, können sich weniger Restkörner oder Restfrüchte 73 anhäufen, und der Abstand A kann daher trotzdem verhältnismäßig klein sein. Zudem weist das Rücklauf- Förderband 30 ein Gefälle (nicht bezeichnet) in Fahrtrichtung 83 auf. Aufgrund der aktiven Förderung der Restkörner oder Restfrüchte 73 wäre auch eine Anordnung des Rücklauf- Förderbandes 30 mit weniger Gefälle möglich. Jedoch kann der unterhalb des Rücklauf- Förderbandes 30 gewonnene Bauraum für die Reinigungsanordnung 5 verwendet werden. Zudem ist dadurch der Übergaberaum 40 vergrößert. Diese Ausrichtung hat sich daher als vorteilhaft erwiesen.

Das Rücklauf- Förderband 30 ist aus einem mit einem Kunststoff beschichteten Textil hergestellt. Dabei ist das Textil bevorzugt ein Gewebe, Gewirk oder Geflecht. Prinzipiell ist aber auch ein Gestrick oder ein Vlies als Textil verwendbar. Bei dem Kunststoff handelt es sich um ein Elastomer, hier um Gummi.

An einer Außenfläche 306 des Rücklauf- Förderbandes 30, auf der die Restkörner oder Restfrüchte 73 transportiert werden, sind Transportstege 31 angeordnet, die sich in eine Querrichtung 88 quer zur Fahrtrichtung 83 erstrecken. Die Transportstege 31 ermöglichen, insbesondere bei Hangfahrt, einen besseren Transport der Restkörner oder Restfrüchte 73. Zudem kann die im Übergaberaum 40 anfallende Erntegutmenge während einer Erntefahrt groß sein. Da das Rücklauf- Förderband 30 aktiv angetrieben wird, können die Transportstege 31 dann ein Freiräumen des Übergaberaumes 40 unterstützen.

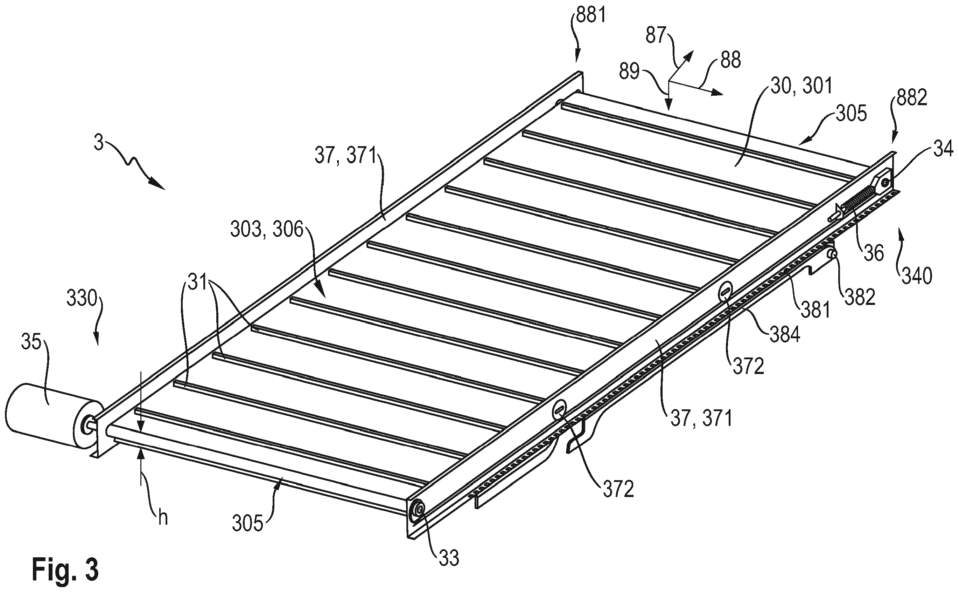

Das Erntegut 7 wird in Förderrichtung 84 des Rücklauf- Förderbandes 30 zum Vorbereitungsboden 61 gefördert. Bei dem dargestellten Mähdrescher 1 ist das dem Dreschwerk 4 zugewandte Ende des Rücklauf- Förderbandes 30 angetrieben. Es bildet hier daher das antriebsseitige Ende 330 des Rücklauf- Förderbandes 30. Dadurch bildet ein dem Axialrotor 6 zugewandter Förderabschnitt 303 des Rücklauf- Förderbandes 30 einen gezogenen Lasttrum 301, während ein dem Axialrotor 6 abgewandter Rücklaufabschnitt 304 den Leertrum 302 bildet. Es ist aber auch ein Rücklauf- Förderband 30 bevorzugt, bei dem das dem Dreschwerk 4 abgewandte Ende (s. **Fig. 3**) angetrieben wird. Dann bildet der Förderabschnitt 303 den Leertrum 302 und wird geschoben. Diese Ausführungsform ist in Bezug auf den dafür benötigten Energieverbrauch weniger vorteilhaft.

Ein Überlappung L des Rücklauf- Förderbandes 30 vom Vorbereitungsboden 61, insbesondere von der Fallstufe 63 des Vorbereitungsbodens 61, ist einstellbar. Zudem ist die Geschwindigkeit des Rücklauf- Förderbandes 30 einstellbar. Dadurch kann eine mögliche und/oder benötigte Wurfweite 65 der Restkörner oder Restfrüchte 73 und/oder ein Auftreffpunkt 63 der Restkörner oder Restfrüchte 73 auf dem Vorbereitungsboden 61 insbesondere erntegutabhängig eingestellt werden. Bei kleinerer Überlappung L und/oder größerer Geschwindigkeit des Rücklauf- Förderbandes 30 ist der Auftreffpunkt 64 der Restkörner oder Restfrüchte 73 in Förderrichtung 84 weiter hinten, so dass die Restkörner oder Restfrüchte 73 länger auf dem Vorbereitungsboden 61 verbleiben und dort mit den bereits im Dreschwerk 4 abgeschiedenen Körnern oder Früchten 71 besser vermischt und homogenisiert werden. Dabei kann schwereres Erntegut 7 mit höherer Geschwindigkeit des Rücklauf- Förderbandes 30 transportiert werden, um denselben Auftreffpunkt 64 erreichen zu können, wie leichteres Erntegut 7 bei geringerer Geschwindigkeit. Durch Veränderung der Geschwindigkeit kann zudem die Wurfweite 65 vergrößert werden, so dass sich das Erntegut 7 nach dem Abwurf besser auffächert. Die Geschwindigkeit des Rücklauf- Förderbandes 30 beträgt dabei bevorzugt etwa 1,5-4 m/s, besonders bevorzugt 2 - 3 m/s. Eine Wurfrichtung der Restkörner oder Restfrüchte 73 ist beispielhaft durch einen Pfeil 85 gezeigt.

Um eine einfache Handhabung des Rücklauf- Förderbandes 30 zu ermöglichen, insbesondere beim Verstellen seiner Überlappung L mit dem Vorbereitungsboden 61 oder für Wartungsarbeiten, ist das Rücklauf- Förderband 30 in eine modular aufgebaute Rücklaufbaugruppe 3 integriert. Lediglich der Übersichtlichkeit halber ist in **Fig. 2 (a)** nur das Rücklauf- Förderband 30 dargestellt. Gegenüber der **Fig. 2 (a)** ist in **Fig. 2 (b)** der Axialrotor 6 vollständig dargestellt. **Fig. 2 (b)** zeigt auch nicht das Rücklauf- Förderband 30, sondern die Rücklaufbaugruppe 3. Das Dreschwerk 4 ist dort nicht dargestellt, jedoch ein zum Häckslern des Halmgutes 74 vorgesehener Strohhäcksler 93.

Die Rücklaufbaugruppe 3 zeigt die **Fig. 3**. Sie weist einen Rahmen 37 auf, der zwei einander gegenüberliegende Seitenwände 371 umfasst. Die Seitenwände 371 sind parallel zueinander angeordnet. Sie erstrecken sich in die Längsrichtung 87. An den in Längsrichtung 87 gegenüberliegenden Enden 330, 340 der Seitenwände 371 erstrecken sich eine Antriebswelle 33 und eine Abtriebswelle 34 in eine Querrichtung 88 quer zur Längsrichtung 87. Das endlos umlaufende Rücklauf- Förderband 30 ist zwischen den Seitenwänden 371 angeordnet und umschlingt die Antriebs- und die Abtriebswelle 33, 34 jeweils zumindest teilweise.

An der Antriebswelle 33 ist zum Antreiben des Rücklauf- Förderbandes 30 ein Antrieb 35 über eine Kupplung (nicht gezeigt) anschließbar. Der Antrieb 35 ist hier schematisch und an die Antriebswelle 33 angeschlossen dargestellt. Er kann hydraulisch, mechanisch, insbesondere mittels Riemen, oder elektrisch ausgebildet sein. Die Geschwindigkeit des Rücklauf- Förderbandes 30 ist mittels eines Drehzahlsensors (nicht dargestellt) bestimmbar. Der Drehzahlsensor ist an der Abtriebswelle 34 angeordnet.

Um Längenänderungen des Rücklauf- Förderbandes 30 ausgleichen zu können, weist die Rücklaufbaugruppe 3 eine Spannvorrichtung 36 auf, die ebenfalls abtriebsseitig 340 angeordnet ist. Sie ist an einer Seitenwand 371 angeordnet. Mit der Spannvorrichtung 36 wird die Abtriebswelle 34 hier mit der Kraft einer Feder (nicht bezeichnet) gegen die Förderrichtung 84 des Rücklauf- Förderbandes 30 gedrückt. Da die Abtriebswelle 34 das Rücklauf- Förderband 30 zumindest teilweise umschlingt, wird es dabei gegen die Förderrichtung 84 vorgespannt. Anstelle der mit der Feder ausgestatteten Spannvorrichtung ist auch eine hydraulische oder pneumatische Spannvorrichtung bevorzugt.

Sichtbar ist weiterhin, dass ein Wellendurchmesser h der Antriebs- und der Abtriebswelle 33, 34 klein gewählt ist. Dadurch ist die Umwicklung des Rücklauf- Förderbandes 30 in den die Abtriebs- und Antriebswelle 33, 34 jeweils umschlingenden Bogenabschnitten 305 eng, so dass Schmutz, der am Rücklauf- Förderband 30 anhaftet, in den Bogenabschnitten 305 vom Rücklauf- Förderband 30 abpellen kann.

Um das Rücklauf- Förderband 30 in oder gegen die Fahrtrichtung 83 zu verstellen, so dass sich der Überlappung L zum Vorbereitungsboden 61 ändert, ist an den Seitenwänden 371 jeweils eine Transportleiste 381 angeordnet, die hier als Lochleiste ausgebildet ist. Bei im Mähdrescher 1 eingebauter Rücklaufbaugruppe 3 lagern die Seitenwände 371 jeweils auf ortsfest im Mähdrescher 1 befestigten Rahmenteilen 384. Eines der ortsfesten Rahmenteile 384 ist hier zum besseren Verständnis dargestellt. Es ist schienenartig ausgebildet, so dass die auf ihm lagernde Seitenwand 371 der Rücklaufbaugruppe 3 entlang des ortsfesten Rahmenteils 384 verschiebbar ist.

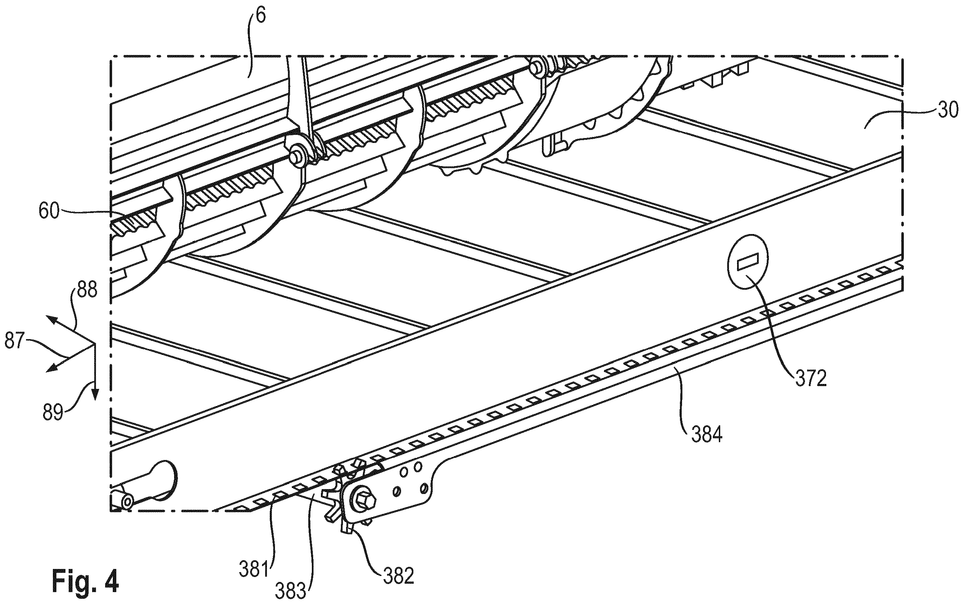

Am abtriebsseitigen Ende (nicht bezeichnet) der Rahmenteile 384 ist jeweils ein Stellrad 382 drehbar befestigt. Die an den gegenüberliegenden Rahmenteilen 384 vorgesehenen Stellräder 382 sind mittels einer Verbindungswelle 383 miteinander verbunden. Dies zeigt die **Fig. 4****.**

Die Stellräder 382 weisen jeweils Zähne (nicht bezeichnet) auf, die bei im Mähdrescher 1 eingebauter Rücklaufbaugruppe 3 jeweils in eine der beiden an den Seitenwänden 371 angeordneten Lochleisten 381 eingreifen. Durch Drehen eines der oder der Stellräder 382 oder der Verbindungswelle 383 kann die Rücklaufbaugruppe 3, und mit ihr das Rücklauf-Förderband 30, in oder gegen seine Längsrichtung 87 verstellt werden. Dabei verschiebt sie sich entlang der ortsfesten Rahmenteile 384. Das Verstellen erfolgt hier manuell. Es ist aber auch ein automatisches Verstellen, insbesondere durch den Bediener, vorzugsweise von der Kabine aus, oder automatisch, denkbar.

Mittels der Stellräder 382 kann die gesamte Rücklaufbaugruppe 3 dem Mähdrescher 1 auch entnommen werden, beispielsweise um Zugriff auf im Mähdrescher 1 angeordnete Sensoren (nicht gezeigt) zu haben, die bei eingebauter Rücklaufbaugruppe 3 nur schwer oder gar nicht zugänglich sind, oder um die Rücklaufbaugruppe 3 selbst warten zu können. Der Antrieb 35 muss dafür mittels der Kupplung von der Rücklaufbaugruppe 3 entkoppelt werden.

Da das endlos umlaufende Rücklauf- Förderband 30 die Antriebs- und die Abtriebswelle 33, 34 zumindest teilweise umschließt, ist zwischen dem Förderabschnitt 303 und dem Rücklaufabschnitt 304 des Rücklauf- Förderbandes 30 ein Zwischenraum 32 (s. **Fig. 2 (a)**) angeordnet. Damit die Lauffähigkeit des Rücklauf- Förderbandes 30 gewährleistet ist, sollte einerseits möglichst wenig Staub und Schmutz in den Zwischenraum 32 gelangen, und andererseits muss der Zwischenraum 32 gereinigt werden können. Dafür sind in den Seitenwänden 371 Reinigungsöffnungen (nicht bezeichnet) vorgesehen, die hier jeweils mit einem Deckel 372 verschlossen sind. Durch die Reinigungsöffnungen ist der Zwischenraum 32 von außen zugänglich, so dass ein Bediener ihn mit einem Staubsauger aussaugen oder mit einem Luftstrom auspusten kann.

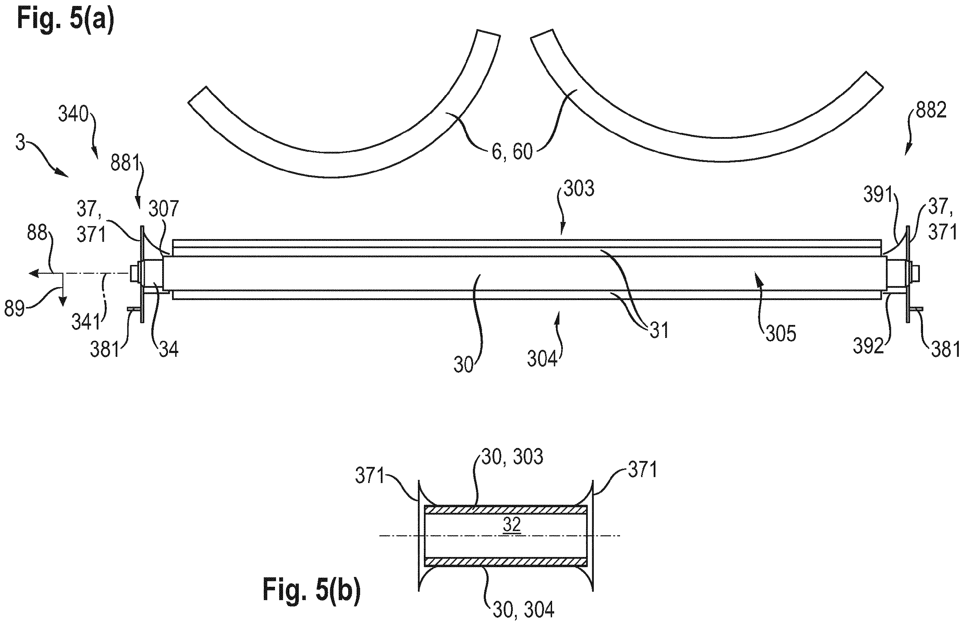

Das Eindringen von Staub und Schmutz in den Zwischenraum 32 wird mittels Dichtmitteln 391, 392 verhindert, die oberhalb und unterhalb des Rücklauf- Förderbandes 30 an den Seitenwänden 371 angeordnet sind. Die Dichtmittel 391, 392 sind an den dem Rücklauf-Förderband 30 zugewandten Innenflächen (nicht bezeichnet) der Seitenwände 371 befestigt. Das am Förderabschnitt 303 anliegende Dichtmittel 391 umfasst eine insbesondere aus einem Kunststoff gebildete Dichtlippe. Das am Rücklaufabschnitt 304 vorgesehene Dichtmittel 392 ist hier als Blechleiste ausgebildet, auf die der Rücklaufabschnitt 304 aufliegt. Dies zeigt **Fig. 5**.

Sichtbar ist, dass sich die Transportstege 31 nicht bis zu den Rändern 307 (s. **Fig. 5 (a)**) des Rücklauf- Förderbandes 30 erstrecken, sondern einen Randabstand (nicht bezeichnet) zu den Rändern 307 aufweisen. Dadurch können die Dichtmittel 391, 392 die Außenfläche 306 des Rücklauf- Förderbandes 30 überlappen, so dass Staub und Schmutz nur schwer in den Zwischenraum 32 gelangen kann.

Die Dichtmittel 391, 392 erstrecken sich aber nicht über die gesamte Länge (nicht bezeichnet) des Rücklauf- Förderbandes 30, sondern Enden ein Stückweit vor dem am antriebsseitigen und dem abtriebsseitigen Ende 330, 340 des Rücklauf- Förderbandes 30, so dass dort der dennoch in den Zwischenraum 32 gelangte Staub und Schmutz zumindest teilweise nach außen austreten kann.

**Bezugszeichenliste**

| | |
|---|---|
| 1 | Mähdrescher, Axialrotor- Mähdrescher |
| 21 | Vorsatzgerät |
| 22 | Schrägförderer |
| 3 | Rücklauf, Rücklaufbaugruppe |
| 30 | Rücklauf- Förderband |
| 301 | Lasttrum |
| 302 | Leertrum |
| 303 | Förderabschnitt |
| 304 | Rücklaufabschnitt |
| 305 | Bogenabschnitt |
| 306 | Außenfläche |
| 307 | Rand des Rücklauf- Förderbandes |
| 31 | Transportsteg |
| 32 | Zwischenraum |
| 33 | Antriebswelle |
| 330 | Antriebsseitiges Ende |
| 34 | Abtriebswelle |
| 340 | Abtriebsseitiges Ende |
| 35 | Antrieb |
| 36 | Spannvorrichtung |
| 37 | Rahmen |
| 371 | Seitenwand |
| 372 | Deckel, verdeckt Durchgangsöffnung in den Zwischenraum |
| 381 | Transportleiste, Lochleiste |
| 382 | Stellrad |
| 383 | Verbindungswelle |
| 384 | Ortsfestes Rahmenteil |
| 391 | Dichtmittel, Dichtlippe |
| 392 | Dichtmittel, Auflagesteg |
| 4 | Dreschwerk |
| 40 | Übergaberaum |
| 41 | Vorbeschleunigungstrommel |
| 42 | Dreschtrommel |
| 43 | Abscheidekorb |
| 44 | Strohwendetrommel |
| 5 | Reinigungsanordnung |
| 51 | Gebläse |
| 52 | Trennsieb |
| 6 | Restkornabscheidung, Axialrotor |
| 60 | Sieb |
| 61 | Vorbereitungsboden, Vorbereitungsboden |
| 62 | Rücklauf, Rücklaufboden |
| 63 | Ende des Vorbereitungsbodens, Fallstufe |
| 64 | Auftreffpunkt |
| 65 | Wurfweite |
| 7 | Erntegut |
| 70 | Erntegutstrom, Erntegut |
| 71 | Erntegutstrom, Körner oder Früchte |
| 72 | Erntegutstrom, ausgedroschenes Erntegut |
| 73 | Erntegutstrom, Restkörner oder Restfrüchte |
| 74 | Erntegutstrom, Nichtkornbestandteile, Halmgut, Halmteile, Spreu |
| 81 | Front |
| 82 | Heck |
| 83 | Fahrtrichtung |
| 84 | Förderrichtung |
| 85 | Wurfrichtung |
| 86 | Boden |
| 87 | Längsrichtung |
| 88 | Querrichtung |
| 89 | Vertikale Richtung |
| 90 | Körnerelevator |
| 91 | Korntank |
| 92 | Auslaufrohr |
| 93 | Strohhäcksler |
| L | Überlappung zwischen Vorbereitungsboden und Rücklauf- Förderband |
| A | Abstand zwischen Restkornabscheidung und Rücklauf- Förderband |
| h | Wellendurchmesser |

## Patentansprüche

1. Selbstfahrenden Mähdrescher (1),
• mit einem Dreschwerk (4), das zum Dreschen von Erntegut (7) vorgesehen ist, wobei in einer vertikalen Richtung (89) unterhalb des Dreschwerks (4) ein Vorbereitungsboden (61) zum Transport von ausgedroschenen Körnern oder Früchten (71) vorgesehen ist,
• mit einer Reinigungsanordnung (5), die zum Trennen von Nichtkornbestandteilen (74) aus dem ausgedroschenen Erntegut (72) vorgesehen ist und dafür zumindest ein Trennsieb (52) umfasst, und die dem Vorbereitungsboden (61) nachgeordnet ist, und
• mit einer Restkornabscheidung (6), insbesondere einem Axialrotor, die zum Abscheiden von Restkörnern oder Restfrüchten (73) aus dem ausgedroschenen Erntegut (72) vorgesehen ist, und die dem Dreschwerk (4) nachgeordnet ist, wobei unterhalb der Restkornabscheidung (6) ein Rücklauf zum Transport der Restkörner oder Restfrüchte (73) zur Reinigungsanordnung (5) vorgesehen ist, und wobei der Rücklauf als Rücklaufbaugruppe (3) ausgebildet ist, die ein aktiv angetriebenes, endlos umlaufendes Rücklauf- Förderband (30) umfasst,
wobei das Rücklauf- Förderband (30) zum Abwurf der Restkörner oder Restfrüchte (73) auf den Vorbereitungsboden (61) vorgesehen ist
**dadurch gekennzeichnet, dass**
die Rücklaufbaugruppe (3), insbesondere manuell, in und gegen die Längsrichtung (87) verstellbar ist, so dass eine Überlappung (L) des Rücklauf- Förderband (30) mit dem Vorbereitungsboden (61) einstellbar ist.

2. Mähdrescher (1) nach Anspruch 1, **dadurch gekennzeichnet, dass** der Vorbereitungsboden (61) als schwingend angetriebener Vorbereitungsboden, als Förderband oder als Schneckenfördererausgebildet ist.

3. Mähdrescher (1) nach einem der vorhergehenden Ansprüche, **dadurch gekennzeichnet, dass** das Rücklauf- Förderband (30) zum Beschleunigen der Restkörner oder Restfrüchte (73) vorgesehen ist

4. Mähdrescher (1) nach einem der vorherigen Ansprüche, **dadurch gekennzeichnet, dass** die Geschwindigkeit des Rücklauf- Förderbandes (30) veränderbar ist.

5. Mähdrescher (1) nach einem der vorherigen Ansprüche, **dadurch gekennzeichnet, dass** am Rücklauf- Förderband (30) Transportstege (31) angeordnet sind, die sich in eine Querrichtung (88) quer zur Längsrichtung (87) erstrecken.

6. Mähdrescher (1) nach einem der vorherigen Ansprüche, **dadurch gekennzeichnet, dass** er als Axialrotor- Mähdrescher ausgebildet ist, wobei die Restkornabscheidung (6) als Axialrotor ausgebildet ist, und sich die Rücklaufbaugruppe (3), und insbesondere mit ihr das Rücklauf- Förderband (30), in eine Längsrichtung (87) etwa parallel zum Axialrotor erstreckt.

7. Mähdrescher (1) nach einem der vorherigen Ansprüche, **dadurch gekennzeichnet, dass** er ein ortsfestes Rahmenteil (384) umfasst, an dem die Rücklaufbaugruppe (3), insbesondere mittels eines Stellrades (381), verschieblich gelagert ist.

8. Mähdrescher (1) nach einem der vorherigen Ansprüche, **dadurch gekennzeichnet, dass** die Rücklaufbaugruppe (3) dem Mähdrescher (1) entnehmbar ist.

9. Rücklaufbaugruppe (3) für einen Mähdrescher (1) nach einem der vorherigen Ansprüche, **dadurch gekennzeichnet, dass** die Rücklaufbaugruppe (3) einen Rahmen (37) mit zwei im Wesentlichen parallel zueinander angeordneten Seitenwänden (371) umfasst, die sich in eine Längsrichtung (87) erstrecken, und zwischen denen ein endlos umlaufendes Rücklauf- Förderband (30) angeordnet ist, wobei an den Seitenwänden (371) jeweils eine als Lochleiste ausgebildete Transportleiste (381) zum manuellen Verschieben der Rücklaufbaugruppe (3) in und gegen die Längsrichtung (87) vorgesehen sind.

10. Rücklaufbaugruppe (3) nach Anspruch 9, **dadurch gekennzeichnet, dass** sich zwischen den Seitenwänden (371) an einem antriebsseitigen Ende (330) eine Antriebswelle (33) zum Antrieb des Rücklauf- Förderbandes (30) und an einem abtriebsseitigen Ende (340) eine Abtriebswelle (34) in eine Querrichtung (88) quer zur Längsrichtung (87) erstrecken, die das Rücklauf- Förderband (30) jeweils zumindest teilweise umschlingt.

11. Rücklaufbaugruppe (3) nach einem der Ansprüche, **dadurch gekennzeichnet, dass** oberhalb und/oder unterhalb des Rücklauf- Förderbandes (30) Dichtmittel (391, 392) vorgesehen sind, die zum Abdichten eines vom Rücklauf- Förderband (30) umschlossenen Zwischenraumes (32) gegen Staub und Schmutz vorgesehen sind.

12. Rücklaufbaugruppe (3) nach einem der Ansprüche, **dadurch gekennzeichnet, dass** an der Abtriebswelle (34) ein Drehzahlsensor angeordnet ist.

13. Rücklaufbaugruppe (3) nach einem der Ansprüche, **dadurch gekennzeichnet, dass** das Rücklauf- Förderband (30) aus einem mit einem Kunststoff, insbesondere einem Elastomer wie beispielsweise Gummi oder ein Gummigemisch, beschichteten Textil hergestellt ist, insbesondere einem Gewebe, Gewirk oder Geflecht.

## Claims

1. A self-propelled combine harvester (1),
• with a threshing assembly (4) which is provided for threshing harvested crop (7), wherein a grain pan (61) for transporting grain or fruit which has been threshed out (71) is provided below the threshing assembly (4) in a vertical direction (89),
• with a cleaning system (5) which is provided for separating non-grain components (74) from the harvested crop which has been threshed out (72) and for this purpose comprises at least one separating sieve (52) and is disposed downstream of the grain pan (61), and
• with a residual grain separating system (6), in particular an axial rotor, which is provided for separating residual grain or residual fruit (73) from the harvested crop which has been threshed out (72) and which is disposed downstream of the threshing assembly (4), wherein a return for transporting the residual grain or residual fruit (73) to the cleaning system (5) is provided below the residual grain separating system (6), and wherein the return is configured as a return module (3) which comprises an actively driven continuously revolving return conveyor belt (30),
wherein the return conveyor belt (30) is provided for dropping the residual grain or residual fruit (73) onto the grain pan (61),
**characterized in that**
the return module (3) can be adjusted, in particular manually, forwards and backwards in the longitudinal direction (87), so that an overlap (L) of the return conveyor belt (30) with the grain pan (61) can be adjusted.

2. The combine harvester (1) according to claim 1, **characterized in that** the grain pan (61) is configured as a grain pan, as a conveyor belt or as a screw conveyor which is driven in oscillation.

3. The combine harvester (1) according to one of the preceding claims, **characterized in that** the return conveyor belt (30) is provided in order to accelerate the residual grain or residual fruit (73).

4. The combine harvester (1) according to one of the preceding claims, **characterized in that** the speed of the return conveyor belt (30) can be varied.

5. The combine harvester (1) according to one of the preceding claims, **characterized in that** transport bars (31) are provided on the return conveyor belt (30) which extend in a transverse direction (88) transverse to the longitudinal direction (87).

6. The combine harvester (1) according to one of the preceding claims, **characterized in that** it is configured as an axial-flow combine harvester, wherein the residual grain separating system (6) is configured as an axial rotor and the return module (3), and in particular the return conveyor belt (30) with it, extends in a longitudinal direction (87) approximately parallel to the axial rotor.

7. The combine harvester (1) according to one of the preceding claims, **characterized in that** it comprises a stationary frame portion (384) on which the return module (3) is displaceably mounted, in particular by means of an adjustment wheel (381).

8. The combine harvester (1) according to one of the preceding claims, **characterized in that** the return module (3) can be removed from the combine harvester (1).

9. A return module (3) for a combine harvester (1) according to one of the preceding claims, **characterized in that** the return module (3) comprises a frame (37) with two side walls (371) which are disposed substantially parallel with respect to each other and which extend in a longitudinal direction (87), and between which a continuously revolving return conveyor belt (30) is disposed, wherein a transport rail (381) which is configured as a perforated rail is provided on each of the side walls (371) for manual displacement of the return module (3) forwards and backwards in the longitudinal direction (87).

10. The return module (3) according to claim 9, **characterized in that** a drive shaft (33) for driving the return conveyor belt (30) extends between the side walls (371) at a drive end (330) and a driven shaft (34) extends between the side walls (371) at a driven end (340) in a transverse direction (88) transverse to the longitudinal direction (87) with at least a portion of the return conveyor belt (30) passing round them.

11. The return module (3) according to one of the claims, **characterized in that** sealing means (391, 392) are provided above and/or below the return conveyor belt (30), which are provided to seal a gap (32) surrounded by the return conveyor belt (30) against dust and dirt.

12. The return module (3) according to one of the claims, **characterized in that** a speed sensor is disposed on the driven shaft (34).

13. The return module (3) according to one of the claims, **characterized in that** the return conveyor belt (30) is produced from a synthetic material, in particular from a textile coated with an elastomer such as rubber or a rubber blend, for example, in particular a woven fabric, a knit or a mesh.

## Revendications

1. Moissonneuse-batteuse automotrice (1)
• comprenant un système de battage (4) qui est prévu pour battre du produit récolté (7), dans une direction verticale (89) au-dessous du système de battage (4) étant prévue une table de préparation (61) pour le transport de grains ou de fruits battus (71),
• comprenant un agencement de nettoyage (5) qui est prévu pour séparer des composants non-grains (74) du produit récolté battu (72) et inclut à cet effet au moins une grille de séparation (52) et qui est disposé à la suite de la table de préparation (61), et
• comprenant une séparation de grains résiduels (6), en particulier un rotor axial qui est prévu pour séparer des grains résiduels ou des fruits résiduels (73) du produit récolté battu (72) et qui est disposée à la suite du système de battage (4), au-dessous de la séparation de grains résiduels (6) étant prévu un retour pour le transport des grains résiduels ou des fruits résiduels (73) vers l'agencement de nettoyage (5), et le retour étant conformé en ensemble de retour (3) qui inclut une bande de convoyage de retour à entraînement actif, à défilement continu (30),
la bande de convoyage de retour (30) étant prévue pour rejeter les grains résiduels ou fruits résiduels (73) sur la table de préparation (61),
**caractérisée en ce que** l'ensemble de retour (3) est déplaçable, en particulier manuellement, dans et à l'opposé de la direction longitudinale (87), de sorte qu'un chevauchement (L) de la bande de convoyage de retour (30) avec la table de préparation (61) est réglable.

2. Moissonneuse-batteuse (1) selon la revendication 1, **caractérisée en ce que** la table de préparation (61) est conçue sous la forme d'une table de préparation à entraînement oscillant, d'une bande de convoyage ou d'un convoyeur à vis.

3. Moissonneuse-batteuse (1) selon une des revendications précédentes, **caractérisée en ce que** la bande de convoyage de retour (30) est prévue pour accélérer les grains résiduels ou les fruits résiduels (73).

4. Moissonneuse-batteuse (1) selon une des revendications précédentes, **caractérisée en ce que** la vitesse de la bande de convoyage de retour (30) est modifiable.

5. Moissonneuse-batteuse (1) selon une des revendications précédentes, **caractérisée en ce que** sur la bande de convoyage de retour (30) sont disposées des barrettes de transport (31) qui s'étendent dans une direction transversale (88) transversalement à la direction longitudinale (87) .

6. Moissonneuse-batteuse (1) selon une des revendications précédentes, **caractérisée en ce qu'**elle est conformée en moissonneuse-batteuse à rotor axial, la séparation de grains résiduels (6) étant conformée en rotor axial, et l'ensemble de retour (3), et en particulier avec lui la bande de convoyage de retour (30), s'étend dans une direction longitudinale (87) sensiblement parallèlement au rotor axial.

7. Moissonneuse-batteuse (1) selon une des revendications précédentes, **caractérisée en ce qu'**elle inclut une partie de cadre fixe (384) sur laquelle l'ensemble de retour (3) est monté mobile, en particulier au moyen d'une roue de réglage (381).

8. Moissonneuse-batteuse (1) selon une des revendications précédentes, **caractérisée en ce que** l'ensemble de retour (3) peut être retiré de la moissonneuse-batteuse (1).

9. Ensemble de retour (3) pour une moissonneuse-batteuse (1) selon une des revendications précédentes, **caractérisé en ce que** l'ensemble de retour (3) inclut un cadre (37) comprenant deux parois latérales (371) qui sont disposées sensiblement parallèlement l'une à l'autre et s'étendent dans une direction longitudinale (87), et entre lesquelles est disposée une bande de convoyage de retour à défilement continu (30), sur les parois latérales (371) étant prévue respectivement une barre de transport (381) conformée en barre perforée pour la translation manuelle de l'ensemble de retour (3) dans et à l'opposé de la direction longitudinale (87).

10. Ensemble de retour (3) selon la revendication 9, **caractérisé en ce qu'**entre les parois latérales (371) s'étendent, dans une direction transversale (88) transversalement à la direction longitudinale (87), à une extrémité côté menant (330) un arbre menant (33) pour l'entraînement de la bande de convoyage de retour (30) et, à une extrémité coté mené (340), un arbre mené (34), la bande de convoyage de retour (30) entourant respectivement lesdits arbres au moins en partie.

11. Ensemble de retour (3) selon une des revendications, **caractérisé en ce que**, au-dessus et/ou au-dessous de la bande de convoyage de retour (30), sont prévus des moyens d'étanchéité (391, 392) qui sont prévus pour étancher contre la poussière et les salissures un interstice (32) entouré par la bande de convoyage de retour (30).

12. Ensemble de retour (3) selon une des revendications, **caractérisé en ce que** sur l'arbre mené (34) est disposé un capteur de vitesse de rotation.

13. Ensemble de retour (3) selon une des revendications, **caractérisé en ce que** la bande de convoyage de retour (30) est fabriquée dans un textile revêtu d'une matière synthétique, en particulier d'un élastomère comme par exemple du caoutchouc ou un mélange de caoutchouc, en particulier dans un matériau tissé, maillé ou tressé.
